# EUROPEAN PATENT SPECIFICATION

(11) **EP 2 501 129 B1**
(45) Date of publication and mention of the grant of the patent: **27.04.2016**
(21) Application number: 10835455.6
(22) Date of filing: 30.11.2010
(51) Int. Cl.: H04N 7/15, H04L 12/18, H04L 29/06

(54) **Implementation Method and Apparatus for Computer-Supported Telecommunications Applications.**
Verfahren und Vorrichtung zum Einsatz computergestützter Telekommunikationsanwendungen
Procédé et appareil de mise en oeuvre pour applications de télécommunications assistées par ordinateur

(30) Priority: 07.12.2009 CN 200910225600
(43) Date of publication of application: 19.09.2012
(73) Proprietor: Huawei Technologies Co., Ltd., Longgang District Shenzhen, Guangdong 518129 (CN)
(72) Inventor: CHEN, Zhonghua, Guangdong 518129 (CN)
(74) Representative: Pfenning, Meinig & Partner mbB
(86) International application number: PCT/CN2010/079272
(87) International publication number: WO 2011/069420

(56) References cited:
- WO-A1-2008/148930
- CN-A- 101 340 550
- CN-A- 101 420 315
- CN-A- 101 534 411
- CN-A- 101 534 411
- CN-A- 101 583 011
- US-A1- 2005 254 440

## Description

### Field of the Invention

The present invention relates to technical field of communications, and particularly, to an implementation method, apparatus and system for Computer-Supported Telecommunications Applications (CSTA).

### Background of the Invention

With the large-scale construction of the 3^{rd}-Generation (3G) network, the video communication and information exchange are becoming more and more widely. In various conference application scenes, most users hope the media conference to provide richer video capabilities, such as multi-picture of multi-user-video, picture switching, video monitoring, video recording, caption and menu text displaying, image (e.g., LOGO) displaying, voice exchange between conventioneers, background audio playing, specific video file playing, etc.

The implementation of the current CSTA is only suitable to the ordinary voice conference, and lacks the ability of multi-media supporting. For example, when a three-way video session or a video conference call is to be established, and assuming that there are three users wanting to attend the conference, the implementation of the current CSTA is unable to allocate corresponding picture information for each user. As a result, none of users A to C can determine whether or not to enter a sub-picture of the conference, which sub-picture shall be entered, how many sub-pictures shall be displayed at the video conference, how to deal with the sub-picture not displaying the user, which pictures shall be seen by the users at the conference, etc.

WO 2008/148930 A1 discloses a system and method for storing multiparty video conferencing presentation. To provide a file format design that supports the storage of multiparty video conferencing presentations. This support is enabled via the inclusion of indications of which tracks belong to a multiparty conference presentation, as well as indications of how to display the decoded video streams in a split-screen. With this arrangement, a player is capable of playing back a recorded multiparty video conferencing presentation in exactly the same manner as it was presented during the actual conference. The file format design also supports the storage of other types of presentations that require the use of simultaneous, multiple independently-decodable video tracks.

EP 2418847 A1 discloses Image-based video conference control method, terminal and system. Setting and editing are performed through the image information dynamically displayed on each conference terminal to implement various conference control operations in the video conference, so that a need of entering a multi-level menu to carry out complicated video conference control is avoided. A dynamic situation of each conference site can be observed in real time, which is more direct-viewing and easier than a process of entering the multi-level menu by performing key-pressing operations to carry out selection. At the same time, no multi-level control menu contests the limited display window on the display screen with the conference site image, so that it is easy for a person participating in the conference to focus attention to view and listen to the content of the conference

US 2005/0254440 A1 discloses private multimedia network. PMN's desktop and meeting room delivery system is designed to support the exponential growth of enterprise team-based initiatives. PMN provides "one-stop-shopping" for the full multimedia rubric. It delivers user-friendly control and cost/effective TV and broadcast quality videoconferencing and other multimedia services to organizations with "critical mass" campuses and building complexes. Though digital systems dominate the videoconferencing marketplace, PMN's hybrid digital/analog architecture has no digital peer in breadth or quality of service within or between campuses.

### Summary of the Invention

The embodiments of the present invention provide an implementation method and system for CSTA, so as to solve the problem of the prior art that the multi-media function of the multi-picture of the multi-media conference cannot be implemented.

In order to solve the above technical problem, the embodiments of present invention provide an implementation method for CSTA, comprising:
receiving a conference operation request issued by a CTI server, wherein the conference operation request carries a conference picture parameter, executing the multi-media operation of a multi-picture at a multi-media conference according to the conference picture parameter, wherein the multi-media conference has a plurality of users and wherein the conference picture parameter is a first conference picture parameter, and executing the multi-media operation of the multi-picture comprising creating corresponding picture and sub-picture according to the conference picture parameter, setting first input and output parameter for the picture and sub-picture according to the conference picture parameter, and implementing an input and output of the picture and/or sub-picture according to the set first input and output parameter, wherein the method further comprises determining that a video shall be recorded according to a video recording parameter in the first conference picture parameter, and recording the content of corresponding picture and/or sub-picture according to the video recording parameter and the set first input and output parameter, characterized by the implementation method is implemented by a Soft Automatic Call Distribution, SoftACD, and setting a timer by the SoftACD for regularly writing recorded data into a corresponding file for video storage; wherein the setting first input and output parameter for the picture and sub-picture according to the conference picture parameter comprises indicating which user's input is inputted to which sub-picture, and which sub-pictures are outputted to which one of the users.

The embodiments of present invention provide an implementation apparatus for CSTA, comprising: a receiving module configured to receive a conference operation request issued by a CTI server, wherein the conference operation request carries conference picture parameter, and an execution module configured to execute the multi-media operation of a multi-picture at a multi-media conference having a plurality of users, according to the conference picture parameter, wherein the conference operation request comprises a first conference picture parameter, and the execution module specifically comprising a picture creation module configured to create corresponding picture and sub-picture according to the first conference picture parameter, an input and output setting module configured to set first input and output parameter for the picture and sub-picture according to the conference picture parameter, an input and output module configured to implement the input and output of the picture and/or sub-picture according to the set first input and output parameter, and a video recording module configured to determine that a video shall be recorded according to a video recording parameter in the first conference picture parameter, and record the content of corresponding picture and/or sub-picture according to the video recording parameter and the set first input and output parameter, characterized in that the video recording module sets a timer for regularly writing recorded data into a corresponding file for video storage; wherein the input and output setting module is configured to set which user's input is inputted to which sub-picture, and which sub-pictures are outputted to which one of the users.

The embodiments of the present invention have the following advantage:
In the embodiments of the present invention, a conference operation request issued by the CTI server is received, wherein the conference operation request carries conference picture parameter; and the multi-media function of multi-picture Is implemented at the multi-media conference according to the conference picture parameter in the conference operation request, thereby enriching the content of the multi-media conference.

### Brief Description of the Drawings

In order to more clearly describe the technical solutions of the prior art or the embodiments of the present invention, the drawings to be used in the descriptions of the prior art or the embodiments are briefly introduced as follows. Obviously, the following drawings just illustrate some embodiments of the present invention, and a person skilled in the art can obtain other drawings from these drawings without paying a creative effort.
Fig. 1 is a flowchart of an embodiment of an implementation method for CSTA of the present invention;
Fig. 2 is a flowchart of an embodiment of an implementation method for CSTA of the present invention;
Fig. 3 is a flowchart of an embodiment of an implementation method for CSTA of the present invention;
Fig. 4 is a flowchart of an embodiment of an implementation method for CSTA of the present invention;
Fig. 5 is a flowchart of an embodiment of an implementation method for CSTA of the present invention;
Fig. 6 is a flowchart of an embodiment of an implementation method for CSTA of the present invention;
Fig. 7 is a schematic structure diagram of an embodiment of an implementation apparatus for CSTA of the present invention;
Fig. 8 is a schematic structure diagram of an execution module of an implementation apparatus for CSTA of the present invention;
Fig. 9 is a schematic structure diagram of an execution module of an implementation apparatus for CSTA of the present invention;
Fig. 10 is a flowchart of an embodiment of a method for sending a conference operation request;
Fig. 11 is a schematic structure diagram of an embodiment of an apparatus for sending a conference operation request; and
Fig. 12 is a schematic structure diagram of an embodiment of an implementation system for CSTA of the present invention.

### Detailed Description of the Preferred Embodiments

The technical solutions of the embodiments of the present invention will be clearly and completely described as follows in conjunction with the drawings. Apparently, the described embodiments are just a part of embodiments of the present invention rather than all the embodiments. Based on the embodiments of the present invention, any other embodiment obtained by a person skilled in the art without paying a creative effort will fall within the protection scope of the present invention.

In order to make the above objects, features and advantages of the embodiments of the present invention be clearer, the embodiments of the present invention will be further described in detail as follows with reference to the drawings.

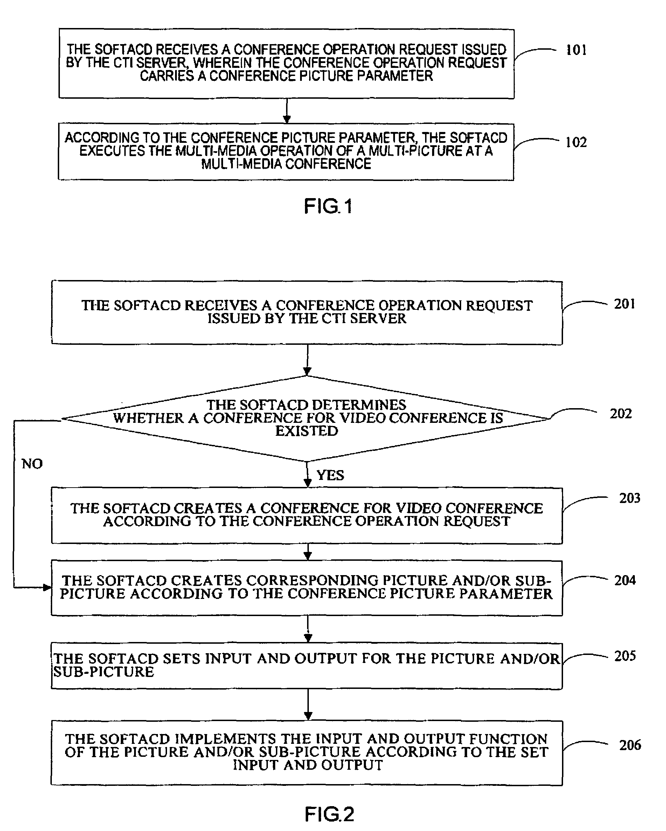

Referring to Fig. 1, in Embodiment 1 of the present invention, the method provided by Embodiment 1 of the present invention may be implemented in the following steps:
Step 101: a Soft Automatic Call Distribution (SoftACD) receives a conference operation request issued by a Computer Telephony Integration (CTI) server, wherein the conference operation request carries a conference picture parameter.

In practice, in order to support richer functions of the multi-media conference, the functions of the CSTA conference shall be extended. Various picture parameters may be defined in the extension structure to indicate the multi-picture information at the multi-media conference, thereby implementing a multi-media function of the multi-picture. For example, input and output information of the picture and/or sub-picture may be specified. Further, the multi-picture information may divide the content of the multi-media conference into user shooting, video file, audio file, image file and/or text content, and may further include Text To Speech (TTS) text file, etc., thereby implementing the multi-picture function of the multi-media conference according to various picture parameters after creating the conference or updating the users of the multi-media conference.

In practice, the SoftACD is connected to the CTI server. After indicating that the consultation of the call scene or the creation of the multi-media conference has been completed, the CTI server issues a conference operation request to the SoftACD, wherein the conference operation request is configured to request the SoftACD to implement the basic functions of the multi-picture and/or single-picture of the multi-media conference, such as video playing, audio playing and image displaying, according to various picture parameters in the conference operation request.

In practical, the SoftACD may determine, after receiving the conference operation request, whether a conference has been created; if not yet, it creates a multi-media conference and sets corresponding picture and/or sub-picture according to various picture parameters in the conference operation request, meanwhile, determines which multi-media user's input shall be input to which sub-picture(s), and which sub-picture(s) shall be outputted to which one of the multi-media users; if a conference has been created, the flow directly goes to step 102.

Step 102: according to the conference picture parameter, the SoftACD executes a multi-media operation of the multi-picture at the multi-media conference.

When establishing related services of the CSTA protocol, the European Computer Manufactures Association (ECMA) reserves related fields of the custom data "private data (6)" and "optional parameters" for extension for both Conference Call and Single Step Conference call. Thus in step 101, through the extension of related fields, the multi-media function of the multi-picture may be executed at the created multi-media conference according to various picture parameters represented by the extension structure issued with the conference operation request. In which, the optional parameters describe the reserved private data and is optional.

To be noted, in practice the corresponding parameters of the above extension structure may include: conference picture parameters, input and output of the multi-media conference, video recording parameters, text displaying parameters and/or background audio parameters, etc. Of course, the above extension manner may be applied to the conference call service, the single step conference call service, or user-defined conference request service, including, but not limited to, other related services for extending the conference operation.

It can be seen that this embodiment not only implements the multi-picture function of the multi-media conference (e.g., setting the currently displayed picture as four sub-pictures), but also at the same time of or after creating the multi-media conference, plays videos, background audios, texts and images, defines the video output, or implements the video recording and other mufti-media functions at the multi-media conference.

Referring to Fig. 2, in Embodiment 2 of the present invention, the method provided by Embodiment 2 of the present invention may be implemented in the following steps:
Step 201: a SoftACD receives a conference operation request issued by a CTI server.
Step 202: the SoftACD determines whether a video conference is existed; if not, enters step 203, and if so, enters step 204.

The multi-media conference of Embodiment 1 may include video conference, audio conference, etc. In this embodiment, the multi-media conference may be a video conference. In this embodiment, the SoftACD firstly determines whether a video conference is existed, according to conference information or conference state associated with the user call in the conference operation request. In practical, when a conference has been created by a user, another user shall be added into the conference based on the current call, thus a certain conference will be deemed as having been created in case a certain call is associated with the conference. The conference state indicates the created or uncreated state. In case no conference is existed at present, creating a conference and entering step 203, otherwise entering step 204.

Step 203: the SoftACD creates a video conference according to the conference operation request.

The SoftACD sets corresponding picture and sub-picture according to the conference picture parameters contained in the conference operation request, wherein the conference picture parameters extended in the conference operation request may be shown as follows:

```
   SUBIMAGE_PARA_S ::= SEQUENCE
   {
      uwSubImageId integer, /*sub-picture ID*/
       ucTransparency integer OPTIONAL, /*sub-picture transparency percent*/
   ucLay integer OPTIONAL, /*sub-picture stack number, in a picture
   each sub-picture has a unique stack number, and the stack numbers are arranged in
   an ascending order from the top to the bottom*/
       ucDataSrcType integer, /*data source type: 0 is user input, 1 is
       video file, 2 is audio file, 3 is image file, and 4 is text content*/
 ucDataSrcString IA5String OPTIONAL, /*determining content according to the
 type of input data, and the content may be file name, text string, etc. */
   callIdentifier ConnectionID OPTIONAL, /*corresponding connection ID when
   the data source is the user*/
       ucDataSrcTypeFlag integer OPTIONAL, /*audio and video control flag: 0
   is input audio and video, 1 is input video, and 2 is input audio*/
   ucCycleTimes integer OPTIONAL, /*cycle times: the assisted video for
   the background audio can be played circularly, and 0 indicates that the playing is
   cycled until the conference is released*/
   ucIsStandard bool OPTIONAL, /*whether or not standard sub-picture,
                                                 true: standard sub-picture;
                                                 false: non-standard sub-picture*/
      SUBIMAGE_STANDARD_PARA_S stSublmageStandardPara OPTIONAL,
         /* standard sub-picture parameter, which is valid when ucIsStandard is 1*/
      SUBIMAGE_NORMAL_PARA_S stOverlapImagePara OPTIONAL,
     /*conventional sub-picture parameter, which is valid when ucIsStandard is 0*/
       ulUserNum integer OPTIONAL,
                          /*the number of users watching the conference picture */
      callIdentifier array of ConnectionID OPTIONAL,
                        /*the connection ID of the user watching the sub-picture */
    /* conventional sub-picture parameter, including size and position attribute */
    SUBIMAGE_NORMAL_PARA_S ::= SEQUENCE
    {
         uwXLeftUpVal integer, /*horizontal ordinate of the upper left corner of
         the sub-picture*/
         uwYLeftUpVal integer, /*vertical coordinate of the upper left corner of
         the sub-picture *1
         uwWidth integer, /*width*/
         uwHeight integer /*height*/
    }
    /*standard sub-picture parameter */
    SUBIMAGE_STANDARD_PARA_S ::= SEQUENCE
    {
    ucStandardSubImageType integer, /*0: standard single picture
                                            1: standard four pictures
                                            2: standard six pictures
                                            3: standard sixteen pictures*/
        ucPostion integer /* standard single picture: 0
                                                standard four pictures: 0∼3
                                                standard six pictures: 0∼5
                                                standard sixteen pictures: 0∼15*/
   }
   }
```

It is clear that the conference picture parameters include the sub-picture parameters such as uwSubImageId integer, ucTransparency integer OPTIONAL, ucLay integer OPTIONAL, ucIsStandard bool OPTIONAL, SUBIMAGE_STANDARD_PARA_S stSubImageStandardPara OPTIONAL, SUBIMAGE_NORMAL_PARA_S stOverlapImagePara OPTIONAL, ulUserNum integer OPTIONAL, callIdentifier array of ConnectionID OPTIONAL, etc; and the data source type parameters such as ucDataSrcType integer, ucDataSrcString IA5String OPTIONAL and callidentifier ConnectionID OPTIONAL, in the content the data source type parameters may indicate the type of the multi-media file to be played, such as video file, audio file or image file, wherein the parameter related to the video file is the video recording parameter, and the parameter related to the text content is the text displaying parameter.

Step 204: the SoftACD creates corresponding picture and/or sub-picture according to the conference picture parameters.

The SoftACD may have various settings for sub-pictures according to the conference picture parameters (for example, whether the sub-picture is standard, the number and the position of the sub-picture, etc.) to create corresponding sub-picture.

Step 205: the SoftACD sets input and output for the picture and/or sub-picture according to the conference picture parameters.

The input may indicate which user's input is inputted to a certain sub-picture, and the output may indicate which sub-pictures are outputted output parameters for which user. By setting the input and output, the SoftACD may enable a specified user to access a certain picture, or output certain pictures to the specified user.

Step 206: the SoftACD implements the input and output function of the picture and/or sub-picture according to the set input and output.

After the setting, the SoftACD performs the input and output function on the picture and/or sub-picture according to the input and output, for example, playing audio or video for a certain user, or outputting one of a plurality of sub-pictures to user A while outputting the contents of other sub-pictures to other users.

In this embodiment, related fields reserved in the conference operation request may be extended to create the picture and/or sub-picture of the conference corresponding to the conference picture parameters, and set input and output of the picture and/or sub-picture according to the input and output, so as to implement the multi-media function of the multi-picture at the multi-media conference.

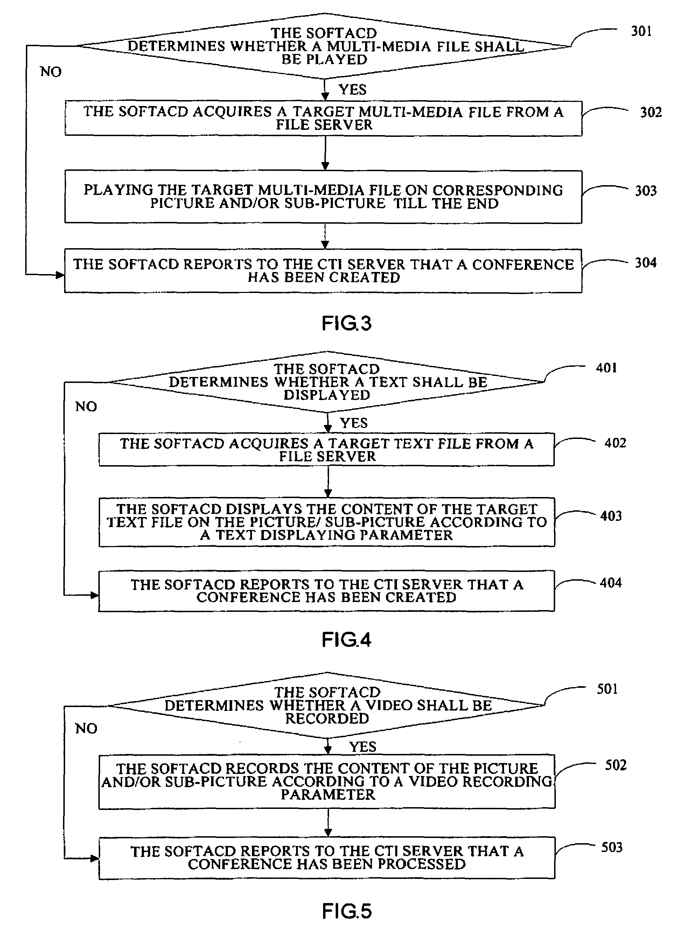

Referring to Fig. 3, in another embodiment of the present invention, the method may further include the following steps after step 206:
Step 301: the SoftACD determines whether a multi-media file shall be played according to video playing parameters of first conference picture parameters; and if so, enters step 302, otherwise enters step 304.

In this embodiment, the SoftACD determines whether a multi-media file shall be played at present. In practice the multi-media file may include audio file, video file or image file, and the multi-media's specific content does not limit the present invention. In practical, the SoftACD may parse the conference operation request; if the data source type of the first conference picture parameters is a video file, it means playing the video file, and if the data source type of the first conference picture parameters is an audio file, it means playing the audio file. In which, the audio playing parameters and video playing parameters may include:
ucCycleTimes integer OPTIONAL, /*cycled times: the assisted video for the background audio can be played circularly, and 0 indicates that the playing is cycled until the conference is released*/

The above parameter just represents some contents of the audio playing parameters and video playing parameters, and different various parameters may be set according to various different requirements in practical. For the image file parameters, please refer to the detailed descriptions of the conference picture parameters in Embodiment 2. The related description of picture/or sub-picture in the parameters of Embodiment 2 indicates a target position, i.e., in which picture or sub-picture the image file will be displayed, and the image file is displayed to the user based on the information of the target position.

The multi-media file playing parameters and the conference picture parameters have the same function, both enabling the SoftACD having received the parameters to implement corresponding multi-media function of the multi-picture, and herein is omitted. To be noted, during extension of the playing parameters of the multi-media files, the present invention may operate on those multi-media files at the same time of or after creating a multi-media conference.

Step 302: the SoftACD acquires a target multi-media file from the file server.

In this embodiment, the SoftACD is also connected to a file server that stores a plurality of video files and audio files. The SoftACD may connect the file server to acquire a target multi-media file to be played. In this embodiment, the text file may be played by using a Text To Speech (TTS) method, and an image file may be displayed by playing operation, etc. Since the contents of the multi-media files vary with the services, countries, areas and operators, the multi-media files are usually stored in the file server for the convenience of replacement.

Step 303: playing the target multi-media file on corresponding picture and/or sub-picture till the end.

According to the received audio playing parameters and video playing parameters, the SoftACD acquires playing information such as the playing mode to be used, the multi-media file to be played and whether a cycle is required. Next, the target multi-media file is played for the user on the created picture and/or sub-picture. In case a cycle is required, the playing may be repeated based on the cycle times, thus the playing conditions may vary in practical.

Step 304: the SoftACD reports to the CTI server that the conference has been created.

In case the SoftACD determines that the multi-media file needs not to be played, it directly reports to the CTI server that the conference has been created.

In this embodiment, by extending the conference operation request, the multi-media file playing parameters may be issued to the SoftACD, so that the SoftACD implements the functions of the multi-media conference, such as video playing and background audio playing, through the settings of the multi-media file playing parameters, thereby enriching the video conference characteristics of the CSTA, and further meeting various user demands on the video conference.

Referring to Fig. 4, in another embodiment of the present invention, the method may further include the following steps after step 206:
Step 401: the SoftACD determines whether a text shall be displayed according to text displaying parameters of the conference picture parameters; and if so, enters step 402, otherwise enters step 404.

In this embodiment, the SoftACD determines whether a text shall be displayed at present. In practical, the SoftACD may determine whether the text shall be displayed at present by parsing whether the conference operation request includes the text displaying parameters, wherein the text displaying parameters may practically include the content for example indicating the sub-picture on which the text is displayed, whether the text is scrolled, the scrolling direction, the font size and/or the text color, etc.

Step 402: the SoftACD acquires a target text file from the file server.

In this embodiment, the SoftACD may acquire the target text file from the file server, and display the text according to the text displaying parameters; herein the text to be displayed may be in the form of a text file, and then the issued text parameters are the same as the parameters which the text is played using the TTS method. In practical, in addition to acquiring the target text file from the file server, the SoftACD may receive, through corresponding message, information such as the content character string to be displayed.

Step 403: according to the text displaying parameters, the SoftACD displays the content of the target text file on the picture/sub-picture.

In which, the SoftACD may determine a target area according to the text displaying position in the text displaying parameters, and display the content of the target text file on the picture/sub-picture, according to the information indicating whether the target text shall be scrolled, the scrolling direction, the font size and/or the text color, etc.

Step 404: the SoftACD reports to the CTI server that the conference has been created.

In the practical multi-media video conference, when the video or audio file is played, or the user speaks at the conference, it is especially important to display the captions to satisfy the user's demand, and usually the text menu displaying and user interaction will be performed. In this embodiment, the text captions and the text menu can be displayed during the multi-media video conference by extending the text displaying parameters in the conference operation request. In addition, the menu can be displayed better through an overlay displaying of the image and text.

Referring to Fig. 5, in another embodiment of the present invention, the method may further include the following steps after step 206:
Step 501: the SoftACD determines whether a video shall be recorded according to video recording parameters in the first conference picture parameters; and if so, enters step 502, otherwise enters step 503.

In this embodiment, the SoftACD determines whether a video shall be recorded at present. In practical, the SoftACD may determine whether corresponding video shall be recorded at present by judging whether video recording parameters are included in the conference operation request, wherein the video recording parameters may be specifically shown as follows:

```
  RECORD_VIDEO_S ::= SEQUENCE
  {
   ulMaxRecTime interger OPTIONAL, /*maximum recording time in a unit of s*/
   ucAudioRecInd interger OPTIONAL, /*whether or not to record audio, 0 : to
   record audio, and 1 : not to record audio*/
   ucRecordVideoFormat interger OPTIONAL, /*format of recorded video: H263,
   H264, MP4, etc.*/
   ucRecordAudioFormat interger OPTIONAL, /* format of recorded audio: AMR,
   G.711, G.729, etc.*/
   ucFrameSpeed interger OPTIONAL, /*frame rate*/
   ucRecMode interger OPTIONAL, /* recording mode: 0 is coverage and 1 is
   addition*/
   usMaxBitRate interger OPTIONAL, /*code rate*/
   ucRecFileType interger OPTIONAL, /*type of recorded file: AVI, 3GP, MEPG,
   RM, etc..*/
   ucFileName IA5String OPTIONAL /*file name of recorded conference
   image*/
   ucProfileLevel interger OPTIONAL /*to identify Profile Level of MPEG4 or
   H.264.
   Profile Level of MPEG4: invalid to H.263*/
   }
```

The video recording parameters are extended in the conference operation request and issued to the SoftACD by the CTI server.

Step 502: the SoftACD records the content of the picture and/or sub-picture according to the video recording parameters.

In case a video recording processing is to be made, the SoftACD connects the file server, opens corresponding file to store the recorded content, and creates corresponding file according to the video recording parameter. Meanwhile, the SoftACD may set a timer to regularly write the recorded data into corresponding file for video storage.

Step 503: the SoftACD reports to the CTI server that the conference has been processed.

After the recorded file is created, the SoftACD reports to the CTI server that the conference has been created, and performs recording by circularly writing file data until the CTI indicates to stop or the current multi-media conference is released.

In this embodiment, in order to monitor the multi-media video conference or for satisfy commercial purposedemand, it is often required to record the multi-media video conference. During the video recording, the recorded file shall be written into the file server. In this embodiment, videos may be recorded in the progress of the video conference to meet the user's demand on the video recording of the multi-media conference. In practical, the video recording is mainly performed by using the CTI server, the SoftACD and the file server. In practical, the service processing logical server may also be used.

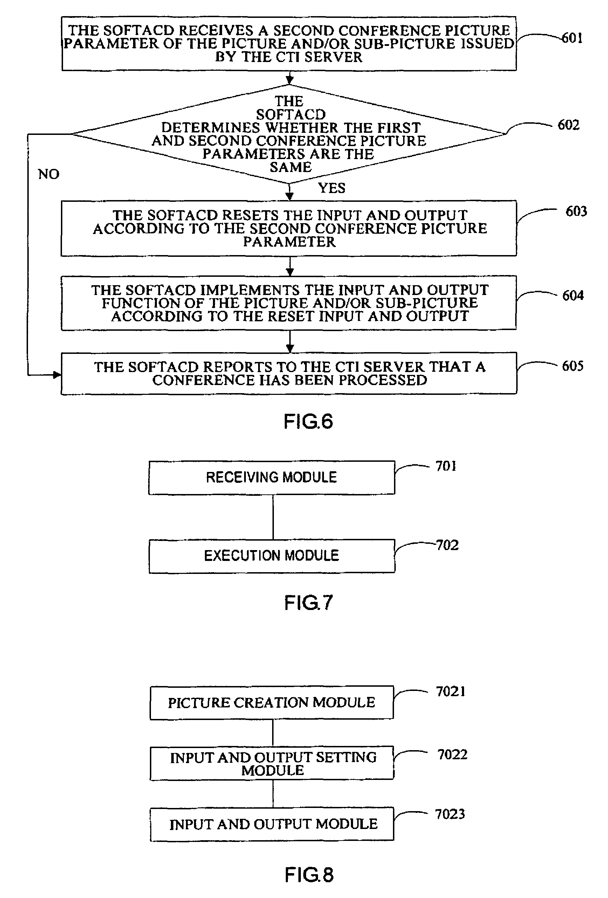

Referring to Fig. 6, in another embodiment of the present invention, the method may further include the following steps after step 206:
Step 601: the SoftACD receives a conference operation request of the picture and/or sub-picture issued by the CTI server, including second conference picture parameters.

In this embodiment, after the SoftACD creates a picture and/or sub-picture of the multi-media conference, the CTI server continues to issues a conference operation request of the picture and/or sub-picture, including wherein the conference operation request includes second conference picture parameters, wherein the picture may include standard picture and/or irregular nonstandard picture.

Step 602: the SoftACD determines whether the first conference picture parameters and second conference picture parameters are the same; if not, enters step 603, otherwise enters step 605.

Step 603: the SoftACD resets the input and output according to the second conference picture parameters.

If the first conference picture parameters and second conference picture parameters are different from each other, it means that different settings are made for the picture and/or sub-picture at the multi-media conference, i.e., the conference picture shall be switched correspondingly, thus the SoftACD resets the input and output according to the second conference picture parameters.

Step 604: the SoftACD implements the input and output function of the picture and/or sub-picture according to the reset input and output.

In this step, the first conference picture is switched to the second conference picture according to the reset input and output, i.e., the second conference picture covers the first conference picture.

Step 605: the SoftACD reports to the CTI server that the conference has been processed.

In the multi-media video conference, the picture switching is often required, e.g., switching from four pictures to one picture, switching from four pictures to more pictures, etc. In that case, conference picture parameters are newly issued to refresh the conference picture and adjust the input and output of the picture. In this embodiment, the picture switching and displaying of the multi-media video conference may be implemented through the second conference picture parameters carried in the conference operation request.

To be noted, the present invention may be applied to the video monitoring function in practice. During implementation, the videos may be outputted to the first and second users respectively according to two sub-conferences of the current multi-media conference, then a new conference is created by the SoftACD and outputted to a third user. Thus the third user can implement the video monitoring of the current multi-media conference, while the first and second users are ignorant of this condition. In addition, during the video monitoring, the processing from monitoring to participating in the conference may be completed by adjusting the input and output parameters.

Of course, the embodiments of the present invention may be applied to the CSTA service interface or various message interfaces defined by other CTI-servers and ACDs; call center, video IVR system, video conference system, etc. in the customer field; and any system that may use the video conference function (e.g., transcoding the playing file through the video conference). When the present invention is applied to the video conference of the network of the IP packet switch domain, the ACD is compatible with the TDM circuit network access and has the video capability in case the video gateway network is embedded in the ACD, and may be applied to the video conference for TDM circuit signal access.

To be noted, the above method embodiments are described as combinations of a series of actions for the convenience of description. But a person skilled in the art shall be appreciated that the present invention is not limited to the described action orders, because according to the present invention, certain steps may be performed in other orders or at the same time. Secondly, a person skilled in the art shall be appreciated that the embodiments described herein are all preferred embodiments, and the actions and modules concerned therein are not certainly necessary for the present invention.

In correspondence to the method provided by the above embodiments of the present invention, referring to Fig. 7, the embodiments of the present invention also provide a structure diagram of an embodiment of an implementation apparatus for CSTA, and the apparatus specifically may include a receiving module 701 and an execution module 702.

The receiving module 701 is configured to receive a conference operation request issued by a CTI server, wherein the conference operation request carries conference picture parameters.

The apparatus of the embodiment may be integrated to the SoftACD, or used as an individual apparatus connected to the SoftACD.

In practice, in order to support richer functions of the multi-media conference, the functions of the CSTA conference shall be extended. Various picture parameters may be defined in the extension structure to indicate the multi-picture information at the multi-media conference. For example, input and output information of the picture and/or sub-picture may be specified; the content of the multi-media conference may be divided into user shooting, video file, audio file, image file and/or text content; and the TTS text file, etc. may be included, thereby implementing the multi-picture function of the multi-media conference according to various picture parameters after creating the conference or updating the users of the multi-media conference.

In practice, the SoftACD is connected to the CTI server. After indicating that the consultation of the call scene or the creation of the multi-media conference has been completed, the CTI server sends a conference operation request to the SoftACD, wherein the conference operation request is configured to request the SoftACD to implement the basic functions of the multi-picture and/or single-picture of the multi-media conference, such as video playing, audio playing and image displaying, according to various picture parameters in the conference operation request.

The execution module 702 is configured to execute the multi-media operation of the multi-picture at the multi-media conference, according to the conference picture parameters.

To be noted, in practice the corresponding parameters of the above extension structure may include: conference picture parameters, input and output of the multi-media conference, video recording parameters, text displaying parameters and/or background audio parameters, etc. Of course, the above extension manner may be applied to the Conference Call service, the Single Step Conference Call service, or user-defined conference request service, including, but not limited to, other related services for extending the conference operation.

It can be seen that this embodiment not only implements the multi-picture function of the multi-media conference (e.g., setting the currently displayed picture as four sub-pictures), but also at the same time of or after creating the multi-media conference, plays videos, background audios, texts and images, or defines video output, or implements the video recording and other multi-media functions at the multi-media conference.

Optionally, as illustrated in Fig. 8, the implementation apparatus for CSTA may further include a conference creation module 703 configured to determine that no video conference is existed, and create a video conference according to the conference picture parameters in the conference operation request.

In this embodiment, the SoftACD firstly determines whether a video conference is existed, for example, according to the user's call association information or the state information.

Optionally, as illustrated in Fig. 8, the execution module of the implementation apparatus for CSTA includes a picture creation module 7021, an input and output setting module 7022 and an input and output module 7023.

The picture creation module 7021 is configured to create corresponding picture and/or sub-picture according to the first conference picture parameters. The SoftACD may create corresponding sub-pictures according to various sub-picture settings in the conference picture parameters, such as whether the sub-pictures are standard, the number of the sub-pictures and the positions thereof.

The input and output setting module 7022 is configured to set first input and output for the picture and/or sub-picture and the conference picture parameters. The input and output setting module 7022 may set which user's input is inputted to that sub-picture, or which sub-pictures are outputted to that user, i.e., set the input and output of the picture and/or sub-picture.

The input and output module 7023 is configured to implement the input and output of the picture and/or sub-picture according to the set first input and output.

After the setting, the SoftACD performs the input and output function on the picture and/or sub-picture according to the input and output, for example, playing audio or video for a certain user, or outputting one of a plurality of sub-pictures to user A while outputting the contents of other sub-pictures to other users.

In this embodiment, related fields reserved in the conference operation request may be extended to create the picture and/or sub-picture of the conference corresponding to the conference picture parameters, and set input and output of the picture and/or sub-picture according to the input and output, so as to implement the multi-media function of the multi-picture at the multi-media conference.

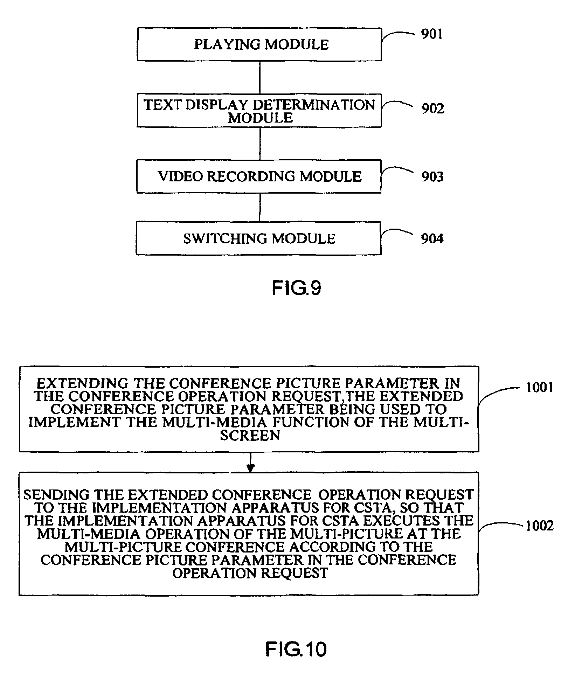

Optionally, as illustrated in Fig. 9, the execution module of the implementation apparatus for CSTA may include a playing module 901, a text display determination module 902, a video recording module 903, and a switching module 904.

The playing module 901 is configured to determine that a multi-media file shall be played according to the video playing parameters; acquire a target multi-media file from a file server; and play the target multi-media file on corresponding picture and/or sub-picture according to the set first input and output.

The playing module 901 firstly determines whether a multi-media file shall be played at present. In practice the multi-media file may include audio file, video file or image file, and its specific content does not limit the present invention. In practical, the SoftACD may parse the conference operation request; if the data source type of the first conference picture parameters are video file, it means playing the video file, and if the data source type of the first conference picture parameters is an audio file, it means playing the audio file. Meanwhile, the playing module is also connected to a file server that stores various video files and audio files. The playing module may connect the file server to acquire a target multi-media file to be played. In this embodiment, the text file may be played in the TTS method, and an image file may be displayed by playing, etc. Since the contents of the multi-media files are usually variables, they are stored in the file server.

The text display determination module 902 is configured to determine, according to text displaying parameters of the first conference picture parameters, that a text shall be displayed; acquire a target text file from a file server; and display the content of the target text file on corresponding picture/sub-picture according to the text displaying parameters and the set first input and output.

The text display determination module 902 firstly determines whether a text shall be displayed at present. In practical, the SoftACD may determine whether the text shall be displayed at present by parsing whether the conference operation request includes text displaying parameters, wherein the text displaying parameters may practically include the content for example indicating the location for displaying, whether the text is scrolled, the scrolling direction, the font size and/or the text color, etc. Next, the text display determination module 902 acquires the target text file from the file server, and displays the text according to the text displaying parameters. Herein the text to be displayed may be in the form of a text file, and then the issued text parameters are the same as the parameters which the text is played using the TTS method. In the practical multi-media video conference, when a video or audio file is played, or a user speaks at the conference, it is especially important to display the captions to satisfy the user's demand, and usually the text menu displaying and user interaction will be performed. In this embodiment, the text captions and the text menu can be displayed during the multi-media video conference by extending the text displaying parameters in the conference operation request.

The video recording module 903 is configured to determine that a video shall be recorded according to video recording parameters in the first conference picture parameters; and record the content of corresponding picture and/or sub-picture according to the video recording parameters and the set first input and output.

In practical, the video recording module 903 may determine whether corresponding video shall be recorded at present by parsing whether video recording parameters are included in the conference operation request. In case a video recording processing is to be made, the video recording module 903 connects the file server, opens corresponding file to store the recorded content, and creates corresponding file according to the video recording parameters. Meanwhile, the video recording module 903 may set a timer to regularly write the recorded data into corresponding file for video storage. During a multi-media video conference, in order to monitor the multi-media video conference or for the commercial purpose, it is often required to record the multi-media video conference. During the video recording, the recorded file shall be written into the file server. In this embodiment, videos may be recorded in the progress of the video conference to meet the user's demand on the video recording of the multi-media conference. In practical, the video recording is mainly performed by the CTI server, the SoftACD and the file server.

The switching module 904 is configured to receive a second conference picture parameters of the picture and/or sub-picture issued by the CTI server; determine that the first conference picture parameters and second conference picture parameters are different from each other; reset the input and output according to the second conference picture parameter; and implement the input and output of the picture and/or sub-picture according to the reset input and output. In the multi-media video conference, the picture switching is often required, e.g., switching from four pictures to one picture, switching from four pictures to more pictures, etc. In that case, conference picture parameters are newly issued to refresh the conference picture and adjust the input and output of the picture. In this embodiment, the picture switching and displaying of the multi-media video conference may be implemented through the second conference picture parameters carried in the conference operation request.

Referring to Fig. 10, the embodiments of the present invention further disclose a method for issuing a conference operation request, including:
Step 1001: extending conference picture parameters in the conference operation request, the extended conference picture parameters being used to implement the multi-media function of the multi-picture.

The executor of this embodiment is the CTI server, which issues the conference operation request to the SoftACD after indicating that the consultation of the call scene or the creation of the multi-media conference has been completed, wherein the conference operation request is configured to request the SoftACD to implement the basic functions of the multi-picture and/or single-picture of the multi-media conference, such as video playing, audio playing and image displaying, according to various picture parameters in the conference operation request.

In practice, in order to support richer functions of the multi-media conference, the functions of the CSTA conference shall be extended. Various picture parameters may be defined in the extension structure to indicate the multi-picture information at the multi-media conference, thereby implementing the multi-media function of the multi-picture. For example, input and output information of the picture and/or sub-picture may be specified. Further, the multi-picture information may divide the content of the multi-media conference into user shooting, video file, audio file, image file and/or text content, and may further include the Text To Speech (TTS) text file, etc., thereby implementing the multi-picture function of the multi-media conference according to various picture parameters after creating the conference or updating the users of the multi-media conference.

Step 1002: sending the extended conference operation request to the implementation apparatus for CSTA, so that the implementation apparatus for CSTA executes the multi-media operation of the multi-picture at the multi-picture conference according to the conference picture parameters in the conference operation request.

The CTI server send to the SoftACD the extended conference operation request, so that the SoftACD implements the functions of the multi-picture conference according to the various picture parameters in the conference operation request.

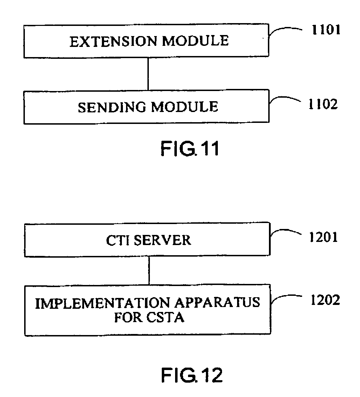

Referring to Fig. 11, the embodiments of the present invention further disclose a CTI server, including: an extension module 1101 configured to extend conference picture parameters in the conference operation request, the extended conference picture parameters being used to implement the multi-media function of the multi-picture; and a sending module 1102 configured to send the extended conference operation request to the implementation apparatus for CSTA, so that the implementation apparatus for CSTA executes the multi-media operation of the multi-picture at the multi-picture conference according to the conference picture parameters in the conference operation request.

Referring to Fig. 12, which is a schematic structure diagram of an embodiment of an implementation system for CSTA of the present invention. The system may specifically include a CTI server 1201 and an implementation apparatus 1202 for CSTA.

The CTI server 1201 is configured to extend conference picture parameters in the conference operation request, the extended conference picture parameters being used to implement the multi-media function of the multi-picture; and send the extended conference operation request to the implementation apparatus for CSTA, so that the implementation apparatus for CSTA executes the multi-media operation of the multi-picture at the multi-picture conference according to the conference picture parameters in the conference operation request.

The implementation apparatus 1202 for CSTA is configured to receive the conference operation request issued by the CTI server and carrying conference picture parameters, and execute the multi-media operation of the multi-picture at the multi-media conference according to the conference picture parameter.

To be noted, herein the term "include", "comprise" or any other variant intends to cover the nonexclusive inclusion, so that a process, method, article or device, which includes a series of elements, includes not only those elements, but also other elements not explicitly listed, or inherent elements of the process, method, article or device. When there is no additional limitation, the element defined by the sentence "including a ..." does not exclude the existence of other same elements in the process, method, article or device including that element.

A person skilled in the art will be appreciated that all or a part of the steps of various methods in the above embodiments may be completed by related hardware instructed by a program. The program may be stored in a computer readable storage medium, including ROM, RAM, magnetic disk, optical disk, etc.

An implementation method, apparatus and system for CSTA provided by the embodiments of the present invention are detailedly described as above, in which specific examples are used to illustrate the principle and implantation of the present invention. The descriptions of the above embodiments just intend to help understanding the methods and ideas of the embodiments of the present invention. Meanwhile, a person skilled in the art may make modifications to the implementations and application ranges based on the ideas of the embodiments of the present invention. To sum up, the Specification shall not be construed as limitations to the present invention.

## Claims

1. An implementation method for Computer-Supported Telecommunications Applications, CSTA, comprising:
receiving (101, 201) a conference operation request issued by a Computer Telephony Integration, CTI, server, wherein the conference operation request carries a conference picture parameter;
executing (102) a multi-media operation of a multi-picture at a multi-media conference according to the conference picture parameter, wherein the multi-media conference has a plurality of users;
wherein the conference picture parameter is a first conference picture parameter, and executing the multi-media operation of the multi-picture comprising:
creating (204) corresponding picture and sub-picture according to the conference picture parameter;
setting (205) first input and output parameter for the picture and sub-picture according to the conference picture parameter; and
implementing (206) an input and output of the picture and/or sub-picture according to the set first input and output parameter; wherein the method further comprises:
determining (501) that a video shall be recorded according to a video recording parameter in the first conference picture parameter; and
recording (502) the content of corresponding picture and/or sub-picture according to the video recording parameter and the set first input and output parameter;
**characterized by**
the implementation method being implemented by a Soft Automatic Call Distribution, SoftACD, and
setting a timer by the SoftACD for regularly writing recorded data into a corresponding file for video storage;
wherein the setting (205) first input and output parameter for the picture and sub-picture according to the conference picture parameter comprises indicating which user's input is inputted to which sub-picture, and which sub-pictures are outputted to which one of the users.

2. The method according to claim 1, wherein the multi-media conference is a video conference, and the method further comprising:
determining (202) that no video conference is existed, and creating (203) a video conference according to the conference picture parameter in the conference operation request;
executing the multi-media operation of the multi-picture at the multi-media conference according to the conference picture parameter in the conference operation request comprising:
executing (204) the multi-media operation of the multi-picture at the created video conference according to the conference picture parameter in the conference operation request.

3. The method according to claim 1, wherein the first conference picture parameter comprises a video playing parameter, and the method further comprising:
determining (301) that a multi-media file shall be played according to the video playing parameter;
acquiring (302) a target multi-media file from a file server; and
playing (303) the target multi-media file on corresponding picture and/or sub-picture according to the set first input and output parameter.

4. The method according to claim 1, further comprising:
determining (401) that a text shall be displayed according to a text displaying parameter in the first conference picture parameter;
acquiring (402) a target text file from a file server; and
displaying (403) the content of the target text file on corresponding picture/sub-picture according to the text displaying parameter and the set first input and output parameter.

5. The method according to claim 1, further comprising:
receiving (601) a second conference picture parameter of the picture and/or sub-picture issued by the CTI server;
determining (602) that the first conference picture parameter is different from the second conference picture parameter;
resetting (603) the input and output parameter according to the second conference picture parameter; and
implementing (604) the input and output of the picture and/or sub-picture according to the reset input and output parameter.

6. An implementation apparatus for Computer-Supported Telecommunications Applications, CSTA, comprising:
a receiving module (701) configured to receive a conference operation request issued by a Computer Telephony Integration, CTI, server,
wherein the conference operation request carries a conference picture parameter; and
an execution module (702) configured to execute a multi-media operation of a multi-picture at a multi-media conference having a plurality of users, according to the conference picture parameter;
wherein the conference operation request comprises a first conference picture parameter, and the execution module specifically comprising:
a picture creation module (7021) configured to create corresponding picture and sub-picture according to the first conference picture parameter;
an input and output setting module (7022) configured to set first input and output parameter for the picture and sub-picture according to the conference picture parameter;
an input and output module (7023) configured to implement the input and output of the picture and/or sub-picture according to the set first input and output parameter; and
a video recording module (903) configured to determine that a video shall be recorded according to a video recording parameter in the first conference picture parameter; and record the content of corresponding picture and/or sub-picture according to the video recording parameter and the set first input and output parameter,
**characterized in that**
the video recording module (903) sets a timer for regularly writing recorded data into a corresponding file for video storage;
wherein the input and output setting module (7022) is configured to set which user's input is inputted to which sub-picture, and which sub-pictures are outputted to which one of the users.

7. The apparatus according to claim 6, wherein the execution module (702) further comprises a playing module (901) configured to determine that a multi-media file shall be played according to the video playing parameter; acquire a target multi-media file from a file server; and play the target multi-media file on corresponding picture and/or sub-picture according to the set first input and output parameter.

8. The apparatus according to claim 6, wherein the execution module (702) further comprises a text display determination module (902) configured to determine that a text shall be displayed according to a text displaying parameter of the first conference picture parameter; acquire a target text file from a file server; and display the content of the target text file on corresponding picture/sub-picture according to the text displaying parameter and the set first input and output parameter.

9. The apparatus according to claim 6, wherein the execution module (702) further comprises a switching module (904) configured to receive a second conference picture parameter of the picture and/or sub-picture issued by the CTI server; determine that the first conference picture parameter is different from the second conference picture parameters; reset the input and output parameter according to the second conference picture parameter; and implement the input and output of the picture and/or sub-picture according to the reset input and output parameter.

## Patentansprüche

1. Implementierungsverfahren für computergestützte Telekommunikationsanwendungen, CSTA, das Folgendes umfasst:
Empfangen (101, 201) einer Konferenzbetriebsanforderung, die von einem Computertelefonieintegration-Server, CTI-Server, ausgegeben wird, wobei die Konferenzbetriebsanforderung einen Konferenzbildparameter führt;
Ausführen (102) eines Multimediabetriebs eines Mehrfachbildes in einer Multimediakonferenz in Übereinstimmung mit dem Konferenzbildparameter, wobei die Multimediakonferenz mehrere Anwender hat;
wobei der Konferenzbildparameter ein erster Konferenzbildparameter ist und wobei das Ausführen des Multimediabetriebs des Mehrfachbildes Folgendes umfasst:
Erzeugen (204) eines entsprechenden Bildes und eines entsprechenden Teilbildes in Übereinstimmung mit dem Konferenzbildparameter;
Einstellen (205) eines ersten Eingabe- und Ausgabeparameters für das Bild und das Teilbild in Übereinstimmung mit dem Konferenzbildparameter; und
Implementieren (206) einer Eingabe und einer Ausgabe des Bildes und/oder des Teilbildes in Übereinstimmung mit dem eingestellten ersten Eingabe- und
Ausgabeparameter; wobei das Verfahren ferner Folgendes umfasst:
Bestimmen (501), dass ein Video in Übereinstimmung mit einem Videoaufzeichnungsparameter in dem ersten Konferenzbildparameter aufgezeichnet werden soll; und
Aufzeichnen (502) des Inhalts des entsprechenden Bildes und/oder Teilbildes in Übereinstimmung mit dem Videoaufzeichnungsparameter und dem eingestellten ersten Eingabe- und Ausgabeparameter;
**dadurch gekennzeichnet, dass**
das Implementierungsverfahren durch eine automatische Software-Anrufverteilung, SoftACD, implementiert wird und
ein Zeitgeber von der SoftACD eingestellt wird, um regelmäßig aufgezeichnete Daten in eine entsprechende Datei zur Videospeicherung zu schreiben;
wobei das Einstellen (205) des ersten Eingabe- und Ausgabeparameters für das Bild und für das Teilbild in Übereinstimmung mit dem Konferenzbildparameter das Angeben, welche Anwendereingabe in welches Teilbild eingegeben wird und welche Teilbilder zu welchem der Anwender ausgegeben werden, umfasst.

2. Verfahren nach Anspruch 1, wobei die Multimediakonferenz eine Videokonferenz ist und das Verfahren ferner Folgendes umfasst:
Bestimmen (202), dass keine Videokonferenz stattfindet, und Erzeugen (203) einer Videokonferenz in Übereinstimmung mit dem Konferenzbildparameter in der Konferenzbetriebsanforderung;
Ausführen des Multimediabetriebs des Mehrfachbildes in der Multimediakonferenz in Übereinstimmung mit dem Konferenzbildparameter in der Konferenzbetriebsanforderung, das Folgendes umfasst:
Ausführen (204) des Multimediabetriebs des Mehrfachbildes in der erzeugten Videokonferenz in Übereinstimmung mit dem Konferenzbildparameter in der Konferenzbetriebsanforderung.

3. Verfahren nach Anspruch 1, wobei der erste Konferenzbildparameter einen Videoabspielparameter umfasst und wobei das Verfahren ferner Folgendes umfasst:
Bestimmen (301), dass eine Multimediadatei in Übereinstimmung mit dem Videoabspielparameter abgespielt werden soll;
Erfassen (302) einer Ziel-Multimediadatei von einem Datei-Server; und
Abspielen (303) der Ziel-Multimediadatei auf einem entsprechenden Bild und/oder Teilbild in Übereinstimmung mit dem eingestellten ersten Eingabe- und Ausgabeparameter.

4. Verfahren nach Anspruch 1, das ferner Folgendes umfasst:
Bestimmen (401), dass ein Text in Übereinstimmung mit einem Textanzeigeparameter in dem ersten Konferenzbildparameter angezeigt werden soll;
Erfassen (402) einer Ziel-Textdatei von einem Datei-Server; und
Anzeigen (403) des Inhalts der Ziel-Textdatei auf einem entsprechenden Bild/Teilbild in Übereinstimmung mit dem Textanzeigeparameter und dem eingestellten ersten Eingabe- und Ausgabeparameter.

5. Verfahren nach Anspruch 1, das ferner Folgendes umfasst:
Empfangen (601) eines zweiten Konferenzbildparameters des Bildes und/oder Teilbildes, der von dem CTI-Server ausgegeben wird;
Bestimmen (602), dass der erste Konferenzbildparameter von dem zweiten Konferenzbildparameter verschieden ist;
Zurücksetzen (603) des Eingabe- und Ausgabeparameters in Übereinstimmung mit dem zweiten Konferenzbildparameter; und
Implementieren (604) der Eingabe und der Ausgabe des Bildes und/oder Teilbildes in Übereinstimmung mit dem zurückgesetzten Eingabe- und Ausgabeparameter.

6. Implementierungsvorrichtung für computergestützte Telekommunikationsanwendungen, CSTA, die Folgendes umfasst:
ein Empfangsmodul (701), das konfiguriert ist, eine Konferenzbetriebsanforderung zu empfangen, die von einem Computertelefonieintegration-Server, CTI-Server, ausgegeben wird,
wobei die Konferenzbetriebsanforderung einen Konferenzbildparameter führt; und
ein Ausführungsmodul (702), das konfiguriert ist, einen Multimediabetrieb eines Mehrfachbildes in einer Multimediakonferenz, die mehrere Anwender hat, in Übereinstimmung mit dem Konferenzbildparameter auszuführen;
wobei die Konferenzbetriebsanforderung einen ersten Konferenzbildparameter enthält und das Ausführungsmodul insbesondere Folgendes umfasst:
ein Bilderzeugungsmodul (7021), das konfiguriert ist, ein entsprechendes Bild und ein entsprechendes Teilbild in Übereinstimmung mit dem ersten Konferenzbildparameter zu erzeugen;
ein Eingabe- und Ausgabeeinstellmodul (7022), das konfiguriert ist, einen ersten Eingabe- und Ausgabeparameter für das Bild und das Teilbild in Übereinstimmung mit dem Konferenzbildparameter einzustellen;
ein Eingabe- und Ausgabemodul (7023), das konfiguriert ist, die Eingabe und die Ausgabe des Bildes und/oder des Teilbildes in Übereinstimmung mit dem eingestellten ersten Eingabe- und Ausgabeparameter zu implementieren; und
ein Videoaufzeichnungsmodul (903), das konfiguriert ist, zu bestimmen, dass ein Video in Übereinstimmung mit einem Videoaufzeichnungsparameter in dem ersten Konferenzbildparameter aufgezeichnet werden soll; und den Inhalt eines entsprechenden Bildes und/oder Teilbildes in Übereinstimmung mit dem Videoaufzeichnungsparameter und dem eingestellten ersten Eingabe- und
Ausgabeparameter aufzuzeichnen,
**dadurch gekennzeichnet, dass**
das Videoaufzeichnungsmodul (903) einen Zeitgeber zum regelmäßigen Schreiben von aufgezeichneten Daten in eine entsprechende Datei zur Videospeicherung einstellt;
wobei das Eingabe- und Ausgabeeinstellmodul (7022) konfiguriert ist, einzustellen, welche Anwendereingabe in welches Teilbild eingegeben wird und welche Teilbilder an welchen der Anwender ausgegeben werden.

7. Vorrichtung nach Anspruch 6, wobei das Ausführungsmodul (702) ferner ein Abspielmodul (901) umfasst, das konfiguriert ist, zu bestimmen, dass eine Multimediadatei in Übereinstimmung mit dem Videoabspielparameter abgespielt werden soll; eine Ziel-Multimediadatei von einem Datei-Server zu erfassen; und die Ziel-Multimediadatei auf einem entsprechenden Bild und/oder Teilbild in Übereinstimmung mit dem eingestellten ersten Eingabe- und Ausgabeparameter abzuspielen.

8. Vorrichtung nach Anspruch 6, wobei das Ausführungsmodul (702) ferner ein Textanzeige-Bestimmungsmodul (902) umfasst, das konfiguriert ist, zu bestimmen, dass ein Text in Übereinstimmung mit einem Textanzeigeparameter des ersten Konferenzbildparameters angezeigt werden soll; eine Ziel-Textdatei von einem Datei-Server zu erfassen; und den Inhalt der Ziel-Textdatei auf einem entsprechenden Bild/Teilbild in Übereinstimmung mit dem Textanzeigeparameter und dem eingestellten ersten Eingabe- und Ausgabeparameter anzuzeigen.

9. Vorrichtung nach Anspruch 6, wobei das Ausführungsmodul (702) ferner ein Schaltmodul (904) umfasst, das konfiguriert ist, einen zweiten Konferenzbildparameter des Bildes und/oder des Teilbildes, der von dem CTI-Server ausgegeben wird, zu empfangen; zu bestimmen, dass der erste Konferenzbildparameter von dem zweiten Konferenzbildparameter verschieden ist; den Eingabe- und Ausgabeparameter in Übereinstimmung mit dem zweiten Konferenzbildparameter zurückzusetzen; und die Eingabe und die Ausgabe des Bildes und/oder Teilbildes in Übereinstimmung mit dem zurückgesetzten Eingabeund Ausgabeparameter zu implementieren.

## Revendications

1. Procédé de mise en oeuvre applications de télécommunication assistées par ordinateur, CSTA, comprenant les étapes suivantes :
recevoir (101, 201) une demande de fonctionnement en mode conférence délivrée par un serveur de couplage téléphonie-informatique, CTI, où la demande de fonctionnement en mode conférence achemine un paramètre d'image de conférence ;
exécuter (102) un fonctionnement en mode multimédia d'une image multiple lors d'une conférence multimédia conformément au paramètre d'image de conférence, où la conférence multimédia a une pluralité d'utilisateurs ;
où le paramètre d'image de conférence est un premier paramètre d'image de conférence, et exécuter l'exploitation multimédia de l'image multiple comprend les étapes suivantes :
créer (204) une image et une sous-image correspondantes conformément au paramètre d'image de conférence ;
définir (205) un premier paramètre d'entrée et de sortie pour l'image et la sous-image conformément au paramètre d'image de conférence ; et
mettre en oeuvre (206) une entrée et une sortie de l'image et/ou de la sous-image conformément au premier paramètre d'entrée et de sortie défini ; où le procédé comprend en outre les étapes suivantes :
déterminer (501) qu'une vidéo devra être enregistrée conformément à un paramètre d'enregistrement de vidéo dans le premier paramètre d'image de conférence ; et
enregistrer (502) le contenu de l'image et/ou de la sous-image correspondantes conformément au paramètre d'enregistrement vidéo et au premier paramètre d'entrée et de sortie défini ;
**caractérisé en ce que**
le procédé de mise en oeuvre est mis en oeuvre par une distribution automatique logicielle des appels, SoftACD, et
un minuteur est défini par le SoftACD pour une écrire de manière régulière des données enregistrées dans un fichier correspondant destiné au stockage vidéo ;
où définir (205) le premier paramètre d'entrée et de sortie pour l'image et la sous-image conformément au paramètre d'image de conférence comprend d'indiquer quelle entrée d'utilisateur est entrée au niveau de quelle sous-image, et quelles sous-images sont délivrées en sortie vers quels utilisateurs.

2. Procédé selon la revendication 1, dans lequel la conférence multimédia est une vidéoconférence, le procédé comprenant en outre les étapes suivantes :
déterminer (202) qu'aucune conférence vidéo n'existe, et créer (203) une vidéoconférence conformément au paramètre d'image de conférence dans la demande de fonctionnement en conférence ;
exécuter le fonctionnement multimédia de l'image multiple lors de la conférence multimédia conformément au paramètre d'image de conférence dans la demande de fonctionnement en conférence comprenant l'étape suivante :
exécuter (204) le fonctionnement multimédia de l'image multiple lors de la conférence vidéo créée conformément au paramètre d'image de conférence dans la demande de fonctionnement en conférence.

3. Procédé selon la revendication 1, dans lequel le premier paramètre d'image de conférence comprend un paramètre de lecture vidéo, et le procédé comprend en outre les étapes suivantes :
déterminer (301) qu'un fichier multimédia doit être lu conformément au paramètre de lecture vidéo ;
acquérir (302) un fichier multimédia cible auprès d'un serveur de fichiers ; et
lire (303) le fichier multimédia cible sur une image et/ou une sous-image correspondantes conformément au premier paramètre d'entrée et de sortie défini.

4. Procédé selon la revendication 1, comprenant en outre les étapes suivantes :
déterminer (401) qu'un texte doit être affiché conformément à un paramètre d'affichage de texte dans le premier paramètre d'image de conférence ;
acquérir (402) un fichier texte cible auprès d'un serveur de fichiers ; et
afficher (403) le contenu du fichier texte cible sur l'image et/ou la sous-image correspondantes conformément au paramètre d'affichage de texte et au premier paramètre d'entrée et de sortie défini.

5. Procédé selon la revendication 1, comprenant en outre les étapes suivantes :
recevoir (601) un second paramètre d'image de conférence de l'image et/ou de la sous-image délivrées par le serveur CTI ;
déterminer (602) que le premier paramètre d'image de conférence est différent du second paramètre d'image de conférence ;
réinitialiser (603) le paramètre d'entrée et de sortie conformément au second paramètre d'image de conférence ; et
mettre en oeuvre (604) l'entrée et la sortie de l'image et/ou de la sous-image conformément au paramètre d'entrée et de sortie réinitialisé.

6. Appareil de mise en oeuvre pour applications de télécommunication assistées par ordinateur, CSTA, comprenant :
un module de réception (701), configuré pour recevoir une demande de fonctionnement en mode conférence délivrée par un serveur de couplage téléphonie-informatique, CTI,
où la demande de fonctionnement en mode conférence achemine un paramètre d'image de conférence ; et
un module d'exécution (702), configuré pour exécuter un fonctionnement en mode multimédia d'une image multiple lors d'une conférence multimédia ayant une pluralité d'utilisateurs, conformément au paramètre d'image de conférence ;
où la demande de fonctionnement en mode conférence comprend un premier paramètre d'image de conférence, et le module d'exécution comprend spécifiquement :
un module de création d'image (7021), configuré pour créer une image et une sous-image correspondantes conformément au premier paramètre d'image de conférence ;
un module de définition d'entrée et de sortie (7022), configuré pour définir un premier paramètre d'entrée et de sortie pour l'image et la sous-image conformément au paramètre d'image de conférence ;
un module d'entrée et de sortie (7023), configuré pour mettre en oeuvre l'entrée et la sortie de l'image et/ou de la sous-image conformément au premier paramètre d'entrée et de sortie défini ; et
un module d'enregistrement vidéo (903), configuré pour déterminer qu'une vidéo devra être enregistrée conformément à un paramètre d'enregistrement de vidéo dans le premier paramètre d'image de conférence ; et enregistrer le contenu de l'image et/ou de la sous-image correspondantes conformément au paramètre d'enregistrement vidéo et au premier paramètre d'entrée et de sortie défini,
**caractérisé en ce que**
le module d'enregistrement de vidéo (903) défini un minuteur pour écrire de manière régulière des données enregistrées dans un fichier correspondant destiné au stockage vidéo ;
où le module de définition d'entrée et de sortie (7022) est configuré pour définir quelle entrée d'utilisateur est entrée au niveau de quelle sous-image, et quelles sous-images sont délivrées en sortie vers quels utilisateurs.

7. Appareil selon la revendication 6, dans lequel le module d'exécution (702) comprend en outre un module de lecture (901), configuré pour déterminer qu'un fichier multimédia devra être lu conformément au paramètre de lecture vidéo ; acquérir un fichier multimédia cible auprès d'un serveur de fichiers ; et lire le fichier multimédia cible sur une image et/ou une sous-image correspondantes conformément au premier paramètre d'entrée et de sortie défini.

8. Appareil selon la revendication 6, dans lequel le module d'exécution (702) comprend en outre un module de détermination d'affichage de texte (902), configuré pour déterminer qu'un texte devra être affiché conformément à un paramètre d'affichage de texte dans le premier paramètre d'image de conférence ; acquérir un fichier texte cible auprès d'un serveur de fichiers ; et afficher le contenu du fichier texte cible sur l'image et/ou la sous-image correspondantes conformément au paramètre d'affichage de texte et au premier paramètre d'entrée et de sortie défini.

9. Appareil selon la revendication 6, dans lequel le module d'exécution (702) comprend en outre un module de commutation (904), configuré pour recevoir un second paramètre d'image de conférence de l'image et/ou de la sous-image délivrées par le serveur CTI ; déterminer que le premier paramètre d'image de conférence est différent du second paramètre d'image de conférence ; réinitialiser le paramètre d'entrée et de sortie conformément au second paramètre d'image de conférence ; et mettre en oeuvre l'entrée et la sortie de l'image et/ou de la sous-image conformément au paramètre d'entrée et de sortie réinitialisé.
